# EUROPÄISCHE PATENTSCHRIFT

(11) **EP 0 676 852 B1**
(45) Veröffentlichungstag und Bekanntmachung des Hinweises auf die Patenterteilung: **13.12.2000**
(21) Anmeldenummer: 95105265.3
(22) Anmeldetag: 07.04.1995
(51) Int. Cl.: H02K 5/24, F16F 15/08

(54) **In einem Gehäuse elastisch gelagertes Antriebsmittel**
Driving means elastically mounted in a housing
Mécanisme d'entraînement monté élastiquement dans un boîtier

(30) Priorität: 11.04.1994 DE 4412394
(43) Veröffentlichungstag der Anmeldung: 11.10.1995
(73) Patentinhaber: Franz Kleine Agrartechnik GmbH, 33154 Salzkotten (DE)
(72) Erfinder: Schulte, Reinold, Dipl.-Ing., D-33106 Paderborn (DE)
(74) Vertreter: Rehberg, Elmar, Dipl.-Ing.

(56) Entgegenhaltungen:
- DE-C- 911 926
- FR-A- 1 255 721
- FR-A- 2 468 036
- GB-A- 1 029 675

## Beschreibung

Die Erfindung bezieht sich auf ein in einem Gehäuse elastisch gelagertes Antriebsmittel mit einem Stator und mit einem eine Abtriebswelle aufweisenden Rotor. Mit dem Begriff Antriebsmittel werden dabei beliebige Motoren, aber auch Baueinheiten von mit einem Getriebe fest verbundenen Motoren bezeichnet. Der Begriff Stator steht für die Teile des Antriebsmittels, die im Normalfall gegenüber dem Gehäuse ruhen, während der Begriff Rotor alle beweglichen Teile des Antriebsmittels bezeichnet. Über die Abtriebswelle gibt das Antriebsmittel ein Drehmoment ab, dessen Reaktio zwischen dem Stator des Antriebsmittels und dem Gehäuse wirkt. Entsprechend ist das Antriebsmittel mit seinem Stator drehmomentfest gegenüber dem Gehäuse zu lagern.

Wenn das Antriebsmittel zum Antreiben einer drehbar an dem Gehäuse gelagerten Adapterwelle vorgesehen ist, ergeben sich mit der drehmomentfesten Lagerung des Antriebsmittels Schwierigkeiten bei der Verbindung seiner Abtriebswelle mit der Adapterwelle. Diese Schwierigkeiten beruhen darauf, daß ein genaues Fluchten, d. h. eine exakt koaxiale Anordnung, der Drehachse der Abtriebswelle und der Drehachse der Adapterwelle kaum zu erreichen ist. Dies gilt insbesondere bei einer naturgemäß mit Toleranzen verbundenen Serienfertigung.

Theoretisch kann ein genaues Fluchten der beiden Drehachsen zwar erreicht werden, hierfür ist jedoch ein hoher Justieraufwand erforderlich, der beispielsweise auch bei Wartungen des Antriebsmittels oder des Drehlagers der Adapterwelle wieder auftritt. Bereits kleine Winkelfehler oder Exzentrizitäten zwischen den beiden Drehachsen führen bei starrer Verbindung zu einer raschen Beschädigung oder gar Zerstörung des Antriebsmittels oder des Drehlagers der Adapterwelle.

Zum Ausgleich von Toleranzen zwischen der Drehachse der Abtriebswelle und der Drehachse der Adapterwelle ist es aus der DE-Z, Antriebstechnik 26 (1987) Nr. 5, Seiten 43-50 bekannt, ein flexibles Kupplungselement zwischen der Abtriebswelle und der Adapterwelle vorzusehen. Dieses Kupplungselement nimmt sowohl die Winkelfehler als auch die Exzentrizitäten auf. Es macht sich jedoch in einer vergrößerten Baulänge und einem erhöhten Materialaufwand negativ bemerkbar. Auch Wartungsarbeiten, bei denen die Verbindung zwischen der Abtriebswelle des Antriebsmittels und der Adapterwelle gelöst werden müssen, werden durch das zusätzliche Kupplungselement erschwert.

Eine bekannte Anwendungsmöglichkeit für ein in einem Gehäuse gelagertes Antriebsmittel ist bei einem Einzelkornsägerät gegeben. Ein solches Einzelkornsägerät weist ein von dem Antriebsmittel angetriebenes Zellenrad auf, wobei an dem Gehäuse ein Drehlager für eine das Zellenrad tragende Adapterwelle vorgesehen sehen ist, wobei das an dem Gehäuse gelagerte Antriebsmittel einen Stator und einen Rotor mit einer Abtriebswelle aufweist und wobei die Abtriebswelle mit der Adapterwelle verbunden ist. Auch in diesem konkreten Anwendungsfall treten die oben geschilderten Schwierigkeiten auf.

Aus der DE 911 926 ist ein in einem Gehäuse gelagertes Antriebsmittel bekannt, dessen Stator unter Verwendung elastischer Lagermittel in dem Gehäuse frei gelagert ist. Die elastischen Lagermittel in Form eines Gummirings können axial zusammengepreßt und damit radial vorgespannt werden. Die Lagermittel stellen damit ein Spannmittel für die Lagerung des Antriebsmittels in einem Gehäuse dar. Eine Adapterwelle ist nicht vorgesehen.

Aus der FR-A-1 255 721 ist es bekannt, den Motor eines Ventilators mit Hilfe eines Gummirings in einem Ventilatorgehäuse zu lagern. Der Gummiring besitzt eine nach innen umlaufende Rippe, mit der er in eine Nut in dem Stator des Antriebsmittels eingreift, so daß die Lage des elastischen Lagermittels relativ zum Stator damit festgelegt ist.

Aus der GB-A-1 029 675 ist es bekannt, Bauteile unter Verwendung von zwei axial gegeneinander verspannbaren Lagerelementen aus Gummi zu lagern und damit Vibrationen zu absorbieren.

Der Erfindung liegt daher die Aufgabe zugrunde, eine elastische Lagerung für ein Antriebsmittel in einem Gehäuse aufzuzeigen, um an der Stelle dieser elastischen Lagerung die auftretenden Toleranzen hinsichtlich der Lage der Drehachse der Abtriebswelle der Antriebsmittel auszugleichen.

Erfindungsgemäß wird dies durch die Merkmalskombination des Patentanspruches 1 erreicht.

Da das Antriebsmittel nur über das ringförmige Lager, das durch die elastischen Lagermittel ausgebildet ist, mit dem Gehäuse in Verbindung steht, sind sowohl Kippbewegungen des Antriebsmittels relativ zu der Drehachse der Adapterwelle als auch seitliche Verschiebungen des Antriebsmittels in radialer Richtung zu der Drehachse der Adapterwelle möglich. Damit wird einerseits die Kompensation von Winkelfehlern und andererseits die Kompensation von Exzentrizitäten der Drehachse erreicht. Bei einem ringförmigen Lager im Sinne der Erfindung müssen die elastischen Lagermittel nicht zu einem geschlossenen Lagerring angeordnet sein. Lücken in dem Ring um die Drehachse der Abtriebswelle sind durchaus tolerabel. Hinsichtlich der Ausdehnung des Lagers parallel zu der Drehachse der Abtriebswelle ist ringförmig so zu verstehen, daß diese Ausdehnung des Lagers klein gegenüber seinem Durchmesser ist, d. h. zumindest deutlich kleiner als der Durchmesser ist. Anderenfalls ist die Steifigkeit des Lagers gegenüber Verkippungen des Antriebsmittels trotz der elastischen Lagermittel zu groß. Für den Drehmomentübertrag zwischen dem Stator des Antriebsmittels und dem Gehäuse ist eine große Ausdehnung des ringförmigen Lagers parallel zu der Drehachse der Abtriebswelle nicht erforderlich. Hier spielt ausschließlich der Kraftschluß zwischen dem Antriebsmittel und dem Gehäuse, d. h. die Haftreibungen zwischen dem Antriebsmittel und den elastischen Lagermitteln einerseits und den elastischen Lagermitteln und dem Gehäuse andererseits, eine Rolle. Die kleinere der beiden Haftreibungen sollte an einer koaxial zu der Drehachse der Abtriebswelle verlaufenden Oberfläche vorliegen. Auf diese Weise wird eine Überlastsicherung für das Antriebsmittel geschaffen. Beim Überschreiten der Haftreibung ist an der koaxialen Oberfläche eine Relativbewegung zwischen dem Antriebsmittel und dem Gehäuse möglich. Bei der Relativbewegung kommt es maximal zu einer Beschädigung der Lagermittel, die aber leicht austauschbar sind. Vorteilhafterweise sind natürlich sowohl die Innenoberfläche des Gehäuses als auch die Außenoberfläche des Stators im Bereich des ringförmigen Lagers koaxial zu der Drehachse der Abtriebswelle angeordnet. Wie bereits ausgeführt, ist es für den Überlastschutz jedoch ausreichend, wenn die Oberfläche mit der geringeren Haftreibung diese Ausrichtung aufweist. Durch die neue elastische Lagerung des Antriebsmittels an dem Gehäuse kann auf eine flexible Kupplung beim Verbinden der Abtriebswelle mit der drehbar an dem Gehäuse gelagerten Adapterwelle verzichtet werden. Auch größere Toleranzen im Rahmen einer Serienfertigung werden durch die Lagerung kompensiert.

Die Drehverbindung zwischen der Abtriebswelle des Antriebsmittels und der Adapterwelle kann ein Sackloch mit radialer Nut und eine Mitnehmernase aufweisen, sodaß die erforderliche Beweglichkeit gegeben ist.

Bei einer konkreten Ausführungsform ist in dem Gehäuse eine das Antriebsmittel aufnehmende, in Richtung der Drehachse der Abtriebswelle geteilt ausgebildete Hülse vorgesehen, wobei die Lagermittel zwischen den Teilen der Hülse angeordnet sind und zwischen den Teilen der Hülse und axialer Vorspannung stehen. Dabei ist es unschädlich, wenn die Hülse radiales Spiel zu dem Gehäuse aufweist. Auch dieses Spiel wird von den elastischen Lagermitteln des ringförmigen Lagers überbrückt. Insofern sind keine hohen Fertigungsgenauigkeiten bei der Passung der Hülse in dem Gehäuse einzuhalten.

Wie bereits ausgeführt, ist es nicht erforderlich, daß die elastischen Lagermittel einen durchgehenden Lagerring ausbilden, um den gewünschten Ausgleich von Toleranzen der Drehachse der Abtriebswelle zu erreichen. Dennoch sind Vorteile damit verbunden, wenn die elastischen Lagermittel zwischen dem Stator und dem Gehäuse eine geschlossene, ringförmige Dichtung bilden. Ein solcher Vorteil kann darin bestehen, den rückwärtigen Teil des Antriebsmittels vor Staub, Feuchtigkeit o. dgl. zu schützen, die im Bereich der Abtriebswelle auftreten.

Zur Realisierung der geschlossenen Dichtung können die elastischen Lagermittel einen elastischen Ring, wie beispielsweise einen handelsüblichen O-Ring oder einen Quad-Ring, aufweisen. Die Querschnittsform des Rings bestimmt dabei seine Anlagefläche an der Außenoberfläche des Stators und der Innenoberfläche des Gehäuses, aber auch die Form der Mittel, die geeignet sind, den elastischen Ring unter axiale Vorspannung zu setzen, um die gewünschte radiale Vorspannung aufzubringen. Diesbezüglich sind dem Fachmann verschiedene Kombinationen beispielsweise auf dem Bereich der Abdichtung von Wasserpumpen zugänglich.

Vorteilhafterweise ist die radiale Vorspannung der elastischen Lagermittel des ringförmigen Lagers einstellbar. Hiermit ist sowohl der Einsatzpunkt der Überlastsicherung wählbar als auch die Gegenkraft der Lagermittel, die sie den Ausgleichsbewegungen des Antriebsmittels entgegenstellt. Für viele Anwendungen ist es ausreichend, wenn statt einer variabel einstellbaren Vorspannung der elastischen Lagermittel eine definierte und reproduzierbare Vorspannung aufgebracht wird.

Eine leicht realisierbar Möglichkeit, die radiale Vorspannung auf die elastischen Lagermittel aufzubringen, besteht darin, die elastischen Lagermittel axial vorzuspannen. Die axiale Vorspannung führt zu einem radialen Ausweichen der Lagermittel bzw. nach dem Anlegen der Lagermittel an die Außenoberfläche des Stators und die Innenoberfläche des Gehäuses zu der gewünschten radialen Vorspannung.

Um bestimmte Steifigkeiten des ringförmigen Lagers einzustellen, können die elastischen Lagermittel mehrere radial und/oder axial nebeneinander angeordnete elastisch Ringe aufweisen. Dabei ist zu beachten, daß das ringförmige Lager insgesamt keine zu große axiale Ausdehnung im Vergleich zu seinem Durchmesser aufweist. Wenn die elastischen Ringe dabei aus unterschiedlichen Materialien ausgebildet sind, ist damit ein zusätzlicher Steuerungsparameter für die lokal auftretenden Haftreibungen und Steifigkeiten der Lagerung des Antriebsmittels an dem Gehäuse gegeben. So können unterschiedliche Materialien für das Gehäuse und den Stator des Antriebsmittels unterschiedliche Materialien bei den elastischen Ringen erfordern, um maximale Haftreibung zu erreichen.

Das ringförmige Lager ist vorteilhafterweise in der Nähe des Drehlagers angeordnet. In der Nähe des Drehlagers machen sich Winkelfehler zwischen der Drehachse der Abtriebswelle und der Drehachse der Adapterwelle in nur kleinen Wegen bemerkbar, die von den elastischen Lagermitteln besonders leicht auszugleichen sind. Um auch Exzentrizitäten zwischen den beiden Drehachsen problemlos auszugleichen, ist jedoch ein gewisser Abstand zwischen dem ringförmigen Lager für das Antriebsmittel und dem Drehlager für die Adapterwelle erforderlich. Insofern ist der Abstand zwischen den beiden Lagern auf die vornehmlich auftretenden Übereinstimmungsfehler zwischen den Drehachsen abzustimmen.

Ein bekanntes Einzelkornsägerät der oben beschriebenen Art ist erfindungsgemäß dadurch gekennzeichnet, daß das Gehäuse einen Bereich mit einer koaxial zu der Drehachse der Abtriebswelle verlaufenden Innenoberfläche und der Stator einen Bereich mit einer koaxial zu der Drehachse der Abtriebswelle verlaufenden Außenoberfläche aufweist und daß zwischen dem Gehäuse in dem Bereich mit der koaxialen Innenoberfläche und dem Stator in dem Bereich mit der koaxialen Außenoberfläche elastische unter radialer Vorspannung stehende Lagermittel zu einem ringförmigen Lager angeordnet sind, wobei das Antriebsmittel außerhalb der Lagermittel gegenüber dem Gehäuse freiliegt, und daß die Drehachse der Abtriebswelle des Antriebsmittels über das elastische Lagermittel fluchtend zu der Drehachse der Adapterwelle so angeordnet und gehalten ist, daß Winkelfehler und Exzentrizitäten zwischen den Drehachse kompensiert sind.

Wenn das Antriebsmittel ein mit einem Getriebe fest verbundener Elektromotor ist, empfiehlt sich die Anordnung des Lagers im Bereich des Getriebes, um durch das geschlossen umlaufende Lager den Elektromotor vor Staub und Feuchtigkeit im Bereich des Zellenrads zu schützen.

Die Anwendungsmöglichkeiten der vorstehend beschriebenen Erfindung sind sehr zahlreich. Wenn bislang im wesentlichen auf ein Antriebsmittel für eine an einem Gehäuse drehbar gelagerte Adapterwelle abgestellt wurde, so schließt dies auch Motor-Getriebe-Verbindungen ein, bei denen der Motor gegenüber dem Gehäuse des Getriebes zu lagern ist und die Abtriebswelle des Motors mit einer am Gehäuse des Getriebes gelagerten Antriebswelle des Getriebes verbunden ist.

Die Erfindung wird im Folgenden anhand von Ausführungsbeispielen näher erläutert und beschrieben. Es zeigen:
- Figur 1: ein in einem Gehäuse gelagertes Antriebsmittel in einer teilweise längsgeschnittenen Seitenansicht,
- Figur 2: das Antriebsmittel gemäß Figur 1 in einer teilweise quergeschnittenen Draufsicht und
- Figuren 3 bis 6: ein Detail der Lagerung des Antriebsmittels gemäß Figuren 1 und 2 in dem Gehäuse in verschiedenen Ausführungsvarianten.

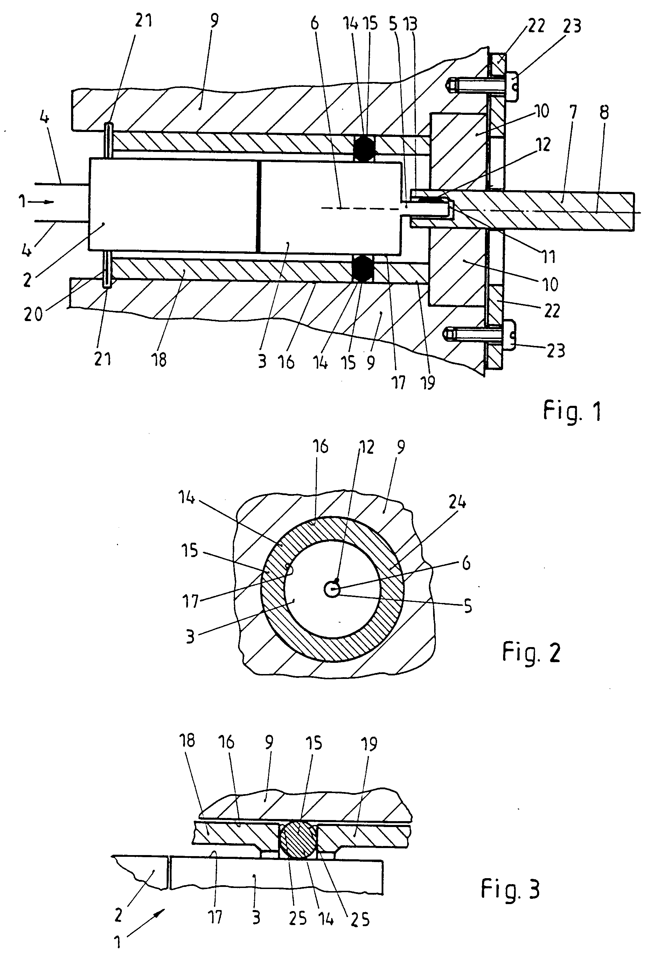

Das in Figur 1 dargestellte Antriebsmittel 1 umfaßt einen Elektromotor 2 und ein fest mit dem Elektromotor 2 verbundenes Getriebe 3. Der Elektromotor 2 weist zwei elektrische Anschlüsse 4 auf. Die sichtbaren Teile des Antriebsmittels 1 gehören bis auf eine Abtriebswelle 5 des Getriebes 3 zum Stator, d. h. zu den ruhenden Teilen, des Antriebsmittels 1. Der Rotor des Antriebsmittels 1 umfaßt alle beweglichen Teile des Elektromotors 2 und des Getriebes 3, d. h. insbesondere die Abtriebswelle 5. Die Abtriebswelle 5 weist eine Drehachse 6 auf. Weiterhin ist die Abtriebswelle 5 mit einer Adapterwelle 7 verbunden. Die Adapterwelle 7 ist um eine Drehachse 8 drehbar an einem Gehäuse 9 gelagert. Dazu ist zwischen dem Gehäuse 9 und der Adapterwelle 8 ein Kugellager 10 vorgesehen. Das Kugellager 10 ist als doppelreihiges Schrägkugellager ausgebildet und nimmt sämtliche auf die Adapterwelle 7 einwirkenden Kräfte, bis auf das Drehmoment um die Drehachse 8, auf. D. h., die Drehachse 8 ist gegenüber dem Gehäuse 9 fest. Die Verbindung der Abtriebswelle 5 mit der Adapterwelle 7 ist durch ein Sackloch 11 in der Adapterwelle 8 gegeben, in das die Abtriebswelle 5 hineinragt, wobei eine Mitnehmernase 12 der Abtriebswelle in eine entsprechende radiale Nut 13 des Sacklochs eingreift. Bei dieser Anordnung kann es zu verschiedenen Abweichungen der Drehachse 6 der Abtriebswelle 5 und der Drehachse 8 der Adapterwelle 7 kommen. Ein exaktes Fluchten der beiden Drehachsen 6 und 8 ist nur mit enormem Fertigungsaufwand zu realisieren. Winkelfehler und Exzentrizitäten zwischen den Drehachsen 6 und 8 werden hier durch die Lagerung des Antriebsmittels 1 gegenüber dem Gehäuse 9 kompensiert. Eine Lagerung des Antriebsmittels 1 an dem Gehäuse 9 ist grundsätzlich erforderlich, um die Reaktio zu dem von der Abtriebswelle 5 auf die Adapterwelle 7 übertragenen Drehmoment aufzufangen. Für die Lagerung des Antriebsmittels 1 an dem Gehäuse 9 ist ein ringförmiges Lager 14 vorgesehen. Das ringförmige Lager 14 wird von elastischen Lagermitteln 15 gebildet, die in radialer Richtung, d. h. senkrecht zu der Drehachse 6, unter Vorspannung stehen. Die Lagermittel liegen dabei einerseits an einer Innenoberfläche 16 des Gehäuses 9 und an einer Außenoberfläche 17 des Getriebes 3, also einem Bestandteil des Stators des Antriebsmittels 1 an. Auf diese Weise wird das Antriebsmittel 1 kraftschlüssig gegenüber dem Gehäuse 9 gehalten, und die Haftreibung zwischen der Innenoberfläche 16 des Gehäuses und den elastischen Lagermitteln 15 einerseits sowie den elastischen Lagermitteln 15 und der Außenoberfläche 17 des Getriebes 3 andererseits ermöglicht die Ableitung des auf die Antriebseinheit 1 als Reaktio wirkenden Drehmoments. Außerhalb des ringförmigen Lagers 14 liegt das Antriebsmittel gegenüber dem Gehäuse 9 frei. Im Betrieb des Antriebsmittels 1 kann das Antriebsmittel 1 so um das Lager 14 verkippen und sich in dem Lager 14 seitlich verschieben, um Winkelfehler einerseits und Exzentrizitäten andererseits der Drehachsen 6 und 8 zu kompensieren. Um diese Kompensation zu erleichtern, ist das ringförmige Lager 14 so nahe an dem Drehlager 10 der Adapterwelle 7 angeordnet, daS Winkelfehler zwischen den Drehachsen 6 und 8 nur in kleine Verschiebungswege des Antriebsmittels 1 in dem Lager 14 resultieren. Gleichzeitig ist das Lager 14 so weit von dem Drehlager 10 entfernt, daß Exzentrizitäten zwischen den Drehachsen 6 und 8 auch teilweise in Form einer Kippbewegung des Antriebsmittels 1 in dem Lager 14 kompensierbar sind und nicht vollständig durch eine seitliche, d. h. radiale Verschiebung in dem Lager 14 ausgeglichen werden müssen. Die Innenoberfläche 16 des Gehäuses 9 und die Außenoberfläche 17 des Getriebes 3 verlaufen im Bereich des Lagers 14 koaxial zu der Drehachse 6 der Abtriebswelle 5. Im konkreten Fall handelt es sich um konzentrische Zylindermantelflächen. Auf diese Weise stellt das Lager 14 auch eine Überlastsicherung für das Antriebsmittel 1 dar. Bei übermäßigen Drehmomenten wird die Haftreibung in dem Lager 14 überschritten, und das Antriebsmittel kann diesen Drehmomenten durch eine eigene Drehbewegung gegenüber dem Gehäuse 9 ausweichen. Hierbei kommt es in aller Regel zu einer Relativbewegung des Antriebsmittels 1 gegenüber den Lagermitteln 15 und dem Gehäuse 9. Dies hängt jedoch davon ab, ob die Haftreibung zwischen den Lagermitteln 15 und der Innenoberfläche 16 des Gehäuses 9 größer ist als die Haftreibung zwischen den Lagermitteln 15 und der Außenoberfläche 17 des Getriebes 3. Genau kommt es auf die Absolutwerte der Haftreibungen an, und es sind auch die unterschiedlichen Entfernungen der haftenden Oberflächen zu der Drehachse 6 zu beachten. Die radiale Vorspannung der elastischen Lagermittel 15 ist hier dadurch realisiert, daß die Lagermittel 15 unter axialer Vorspannung parallel zu der Drehachse 6 stehen. Dazu sind die elastischen Lagermittel 15 zwischen den Teilen 18 und 19 einer zweiteiligen Hülse 18, 19 angeordnet. Die Hülse 18, 19 ist in das Gehäuse 9 eingepaßt. Sie kann jedoch ohne weiteres ein gewisses Spiel gegenüber dem Gehäuse 9 aufweisen. Dieses Spiel wird durch die elastischen Lagermittel 15 blockiert. Im vorliegenden Fall stützt sich der Teil 18 der Hülse an einem Segerring 20 ab, der in eine Nut 21 in dem Gehäuse 9 eingreift. Der Teil 19 der Hülse liegt an seinem dem Lager 14 abgekehrten Ende an dem Drehlager 10 an. Das Drehlager 10 wird seinerseits durch eine Halteplatte 22 in das Gehäuse 9 eingedrückt. Durch den Verformweg der elastischen Lagerelemente 15 bis zum Anschlag des Drehlagers 10 bzw. der Halteplatte 22 an dem Gehäuse 9 wird die axiale Vorspannung und damit indirekt auch die gewünschte radiale Vorspannung der elastischen Lagerelemente 15 definiert. Über Schrauben 23, mit denen die Halteplatte 22 an dem Gehäuse 9 befestigt ist, kann die radiale bzw. die axiale Vorspannung der elastischen Lagermittel 15 aber auch eingestellt werden, wobei der Maximalwert durch den Anschlag der Halteplatte 22 bzw. des Drehlagers 10 an dem Gehäuse 9 vorgegeben ist.

Als konkreter Anwendungsfall für das Antriebsmittel 1 gemäß Figur 1 kann ein Einzelkornsägerät angegeben werden, wobei die Adapterwelle 8 ein Zellenrad für die Vereinzelung der Samenkörner trägt. Beim Einsatz des Einzelkornsägerätes ist das Auftreten von Staub und Feuchtigkeit im Bereich des Zellenrads nicht zu vermeiden. Gegenüber den Einflüssen von Staub und Feuchtigkeit ist jedoch der Elektromotor 2 gemäß Figur 1 sehr empfindlich. Das Vordringen von Staub und Feuchtigkeit in den Bereich des Motors 2 wird deshalb dadurch verhindert, daß die elastischen Lagermittel 15 zwischen dem Getriebe 3 und dem Gehäuse 9 eine geschlossene, ringförmige Dichtung 24 bilden. Diese Anordnung ist anhand von Figur 2 nachvollziehbar, bei der die elastischen Lagermittel 15 im Bereich des Lagers 14 im Querschnitt dargestellt sind. Ansonsten ist das Getriebe 3 mit der Abtriebswelle 5 in einer Draufsicht aus Richtung der Adapterwelle 8 gemäß Figur 1 dargestellt. Für die mechanischen Eigenschaften des Lagers 15 ist die geschlossen umlaufende Ausbildung nicht erforderlich. Diesbezüglich wäre es unschädlich, wenn die elastischen Lagermittel 14 Lücken bei der Ausbildung des ringförmigen Lagers 15 aufwiesen. Allein für die Dichtfunktion kommt es auf eine ringförmig geschlossene Ausbildung des Lagers 14 an.

Die elastischen Lagermittel können von einem oder mehreren elastischen Ringen gebildet werden. Das Detail gemäß Figur 3 zeigt die Verwendung eines O-Rings als elastisches Lagermittel. Hierbei weisen die Teile 18 und 19 der Hülse 18, 19 ebene, parallel zueinander verlaufende Kopfflächen 25 auf. So sind die Kopfflächen 25 in günstiger Weise dazu geeignet, eine axiale Vorspannung auf dem O-Ring 15 aufzubringen, die wirkungsvoll in die gewünschte radiale Vorspannung resultiert. Weiterhin ist zu Figur 3 anzumerken, daß die Wandstärke der Hülse 18 mit Abstand zu dem Lager 14 verjüngt ausgebildet ist, um dem Antriebsmittel 1 mehr Spiel innerhalb der Hülse 18, 19 zu belassen.

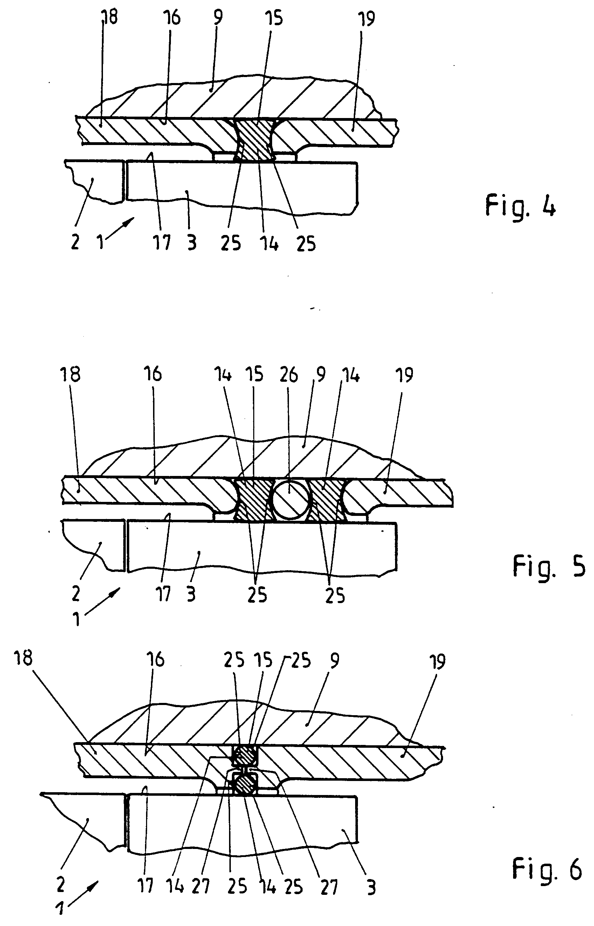

Figur 4 zeigt die Verwendung eines Quad-Rings für die elastischen Lagermittel 15. Zu dessen zielgerichteter axialer Verformung, um die gewünschte radiale Vorspannkraft auf die Außenoberfläche 17 des Getriebes 3 und die Innenoberfläche 16 des Gehäuses 9 aufzubringen, sind die Kopfflächen 25 der beiden Teile der Hülse 18, 19 konvex ausgeformt. Die Verjüngung der Teile der Hülse 18, 19 außerhalb des Lagers 14 entspricht derjenigen gemäß Figur 3 und ist auch bei den weiteren Ausführungsformen gemäß den Figuren 5 und 6 vorgesehen.

Bei der Ausführungsform gemäß Figur 5 umfassen die elastischen Lagerelemente 14 zwei in axialer Richtung hintereinander angeordnete Quad-Ringe. Zwischen den beiden Quad-Ringen ist ein massiver Ring 26 angeordnet, der als Bestandteil der Hülse 18, 19 anzusehen ist. Der Ring 26 weist wie die Teile 18, 19 der Hülse konvexe Kopfflächen 25 zur zielgerichteten Verformung der beiden Quad-Ringe auf. Durch Verwendung mehrerer elastischer Ringe sind die mechanischen Eigenschaften des Lagers 15 variierbar, insbesondere wenn die elastischen Ringe aus unterschiedlichem Material ausgebildet sind. Darüberhinaus kann eine verbesserte Abdichtung in axialer Richtung erreicht werden.

Bei der Ausführungsform gemäß Figur 6 sind ebenfalls zwei elastische Ringe vorgesehen, doch sind diese in radialer Richtung nebeneinander angeordnet. Konkret handelt es sich um zwei koaxiale O-Ringe, wobei der eine an der Innenoberfläche 16 des Gehäuses 9 und der andere an der Außenoberfläche 17 des Getriebes 3 anliegt. Die dabei zur Aufnahme von Drehmomenten erforderliche radiale Vorspannung wird wiederum durch axiales Verformen der elastischen Ringe mit den Teilen 18, 19 der Hülse erreicht. Das Maß der axialen Verformung ist dabei durch zwischen den den einzelnen elastischen Ringen zugeordneten Kopfflächen 25 angeordnete Anschläge 27 definiert. Die Verwendung unterschiedlicher Materialien für die beiden O-Ringe gemäß Figur 6 macht beispielsweise dann Sinn, wenn sich die Innenoberfläche 16 von der Außenoberfläche 17 in ihren Reibungseigenschaften deutlich unterscheidet und für beide Oberflächen genau abgestimmte elastische Lagermittel zu verwenden sind, um eine besonders hohe Haftreibung zu erreichen.

### BEZUGSZEICHENLISTE

- 1: - Antriebsmittel
- 2: - Elektromotor
- 3: - Getriebe
- 4: - Anschluß
- 5: - Abtriebswelle
- 6: - Drehachse
- 7: - Adapterwelle
- 8: - Drehachse
- 9: - Gehäuse
- 10: - Kugellager
- 11: - Sackloch
- 12: - Mitnehmernase
- 13: - Nut
- 14: - Lager
- 15: - Lagermittel
- 16: - Innenoberfläche
- 17: - Außenoberfläche
- 18: - Teil der Hülse
- 19: - Teil der Hülse
- 20: - Segerring
- 21: - Nut
- 22: - Halteplatte
- 23: - Schrauben
- 24: - Dichtung
- 25: - Kopffläche
- 26: - Ring
- 27: - Anschlag

## Patentansprüche

1. In einem Gehäuse (9) gelagertes Antriebsmittel (1) mit einem Stator und einem eine Abtriebswelle (5) aufweisenden Rotor, wobei das Gehäuse (9) einen Bereich mit einer koaxial zu der Drehachse (6) der Abtriebswelle (5) verlaufenden Innenoberfläche (16) und/oder der Stator einen Bereich mit einer koaxial zu der Drehachse (6) der Abtriebswelle (5) verlaufenden Außenoberfläche (17) aufweist, wobei zwischen dem Gehäuse (9) und dem Stator in dem Bereich mit der koaxialen Innenoberfläche (16) und/oder dem Bereich mit der koaxialen Außenoberfläche (17) elastische Lagermittel (15) zu einem ringförmigen Lager (14) angeordnet sind, wobei die Lagermittel (15) unter radialer Vorspannung stehen und wobei das Antriebsmittel (1) außerhalb des ringförmigen Lagers (14) gegenüber dem Gehäuse (9) freiliegt, **dadurch gekennzeichnet**, daß im Gehäuse (9) eine in einem Drehlager gelagerte und eine Drehachse (8) aufweisende Adapterwelle (7) vorgesehen ist, die mit der Abtriebswelle (5) des Antriebsmittels (1) in Drehverbindung steht, und daß die Drehachse (6) der Abtriebswelle (5) des Antriebsmittels (1) über das elastische Lagermittel (15) fluchtend zu der Drehachse (8) der Adapterwelle (7) so angeordnet und gehalten ist, daß Winkelfehler und Exzentrizitäten zwischen den Drehachse (6, 8) kompensiert sind.

2. In einem Gehäuse gelagertes Antriebsmittel nach Anspruch 1, **dadurch gekennzeichnet**, daß die Drehverbindung zwischen der Abtriebswelle (5) des Antriebsmittels (1) und der Adapterwelle (7) ein Sackloch (11) mit radialer Nut (13) und eine Mitnehmernase (12) aufweist.

3. In einem Gehäuse gelagertes Antriebsmittel nach Anspruch 1 oder 2, **dadurch gekennzeichnet**, daß in dem Gehäuse (9) eine das Antriebsmittel (1) aufnehmende, in Richtung der Drehachse (6) der Abtriebswelle (5) geteilt ausgebildete Hülse (18, 19) vorgesehen ist, wobei die Lagermittel (15) zwischen den Teilen (18, 19) der Hülse angeordnet sind und zwischen den Teilen (18, 19) der Hülse unter axialer Vorspannung stehen.

4. In einem Gehäuse gelagertes Antriebsmittel nach einem der Ansprüche 1 bis 3, **dadurch gekennzeichnet**, daß die elastischen Lagermittel (15) zwischen dem Stator und dem Gehäuse (9) eine geschlossene, ringförmige Dichtung (24) bilden.

5. In einem Gehäuse gelagertes Antriebsmittel nach einem der Ansprüche 1 bis 4**, dadurch gekennzeichnet**, daß die elastischen Lagermittel (15) einen elastischen Ring aufweisen.

6. In einem Gehäuse gelagertes Antriebsmittel nach Anspruch 5, **dadurch gekennzeichnet**, daß die elastischen Lagermittel (15) mehrere radial und/oder axial nebeneinander angeordnete elastische Ringe aufweisen.

7. In einem Gehäuse gelagertes Antriebsmittel nach Anspruch 6, **dadurch gekennzeichnet**, daß die elastischen Ringe aus unterschiedlichen Materialien ausgebildet sind.

8. In einem Gehäuse gelagertes Antriebsmittel nach einem der Ansprüche 1 bis 7, **dadurch gekennzeichnet**, daß die radiale Vorspannung der elastischen Lagermittel (15) einstellbar ist.

9. In einem Gehäuse gelagertes Antriebsmittel nach einem der Ansprüche 1 bis 8, **dadurch gekennzeichnet**, daß das ringförmige Lager (14) in der Nähe des Drehlagers (10) angeordnet ist.

10. Einzelkornsägerät mit einem Gehäuse (9), einem Zellenrad und einem Antriebsmittel (1), das einen Stator und einen Rotor mit einer eine Drehachse (6) aufweisenden Abtriebswelle (5) aufweist, wobei an dem Gehäuse ein Drehlager für eine das Zellenrad tragende Adapterwelle (7) mit Drehachse (8) vorgesehen ist, die mit der Abtriebswelle (5) des Antriebsmittels (1) in Drehverbindung steht, **dadurch gekennzeichnet**, daß das Gehäuse (9) einen Bereich mit einer koaxial zu der Drehachse (6) der Abtriebswelle (5) verlaufenden Innenoberfläche (16) und der Stator einen Bereich mit einer koaxial zu der Drehachse (6) der Abtriebswelle (5) verlaufenden Außenoberfläche (17) aufweist und daß zwischen dem Gehäuse (9) in dem Bereich mit der koaxialen Innenoberfläche (16) und dem Stator in dem Bereich mit der koaxialen Außenoberfläche (17) elastische unter radialer Vorspannung stehende Lagermittel (15) zu einem ringförmigen Lager (14) angeordnet sind, wobei das Antriebsmittel (1) außerhalb der Lagermittel (15) gegenüber dem Gehäuse (9) freiliegt, und daß die Drehachse (6) der Abtriebswelle (5) des Antriebsmittels (1) über das elastische Lagermittel (15) fluchtend zu der Drehachse (8) der Adapterwelle (7) so angeordnet und gehalten ist, daß Winkelfehler und Exzentrizitäten zwischen den Drehachse (6, 8) kompensiert sind.

## Claims

1. A driving means (1) elastically mounted in a housing (9), the driving means (1) comprising a stator and a rotor having a drive shaft (5), wherein the housing (9) has an area with an inner surface (16) running coaxially to the axis (6) of rotation of the drive shaft (5) and/or the stator has an area with an outer surface (17) running coaxially to the axis (6) of rotation of the drive shaft (5), wherein, between the housing (9) and the stator within the area having the coaxial inner surface (16) and/or the coaxial outer surface (17), elastic mounting means (15) are arranged to form a ring-shaped bearing (14), wherein the mounting means (15) are under radial pre-stress, and wherein, outside the ring-shaped bearing (14), the driving means (1) is free from the housing (9), **characterized in** that an adaptor shaft (7) being mounted in a rotation bearing and having an axis (8) of rotation is provided within the housing (9), which adaptor shaft (7) is in connection for common rotation with the drive shaft (5) of the driving means (1), and in that the axis (6) of rotation of the drive shaft (5) of the driving means (1) is by means of the elastic mounting means (15) arranged and kept in alignment with the axis (8) of rotation of the adaptor shaft (7) so that angular errors and eccentricities between the axes (6, 8) of rotation are compensated.

2. The driving means elastically mounted in a housing according to claim 1, **characterized in** that the connection for common rotation between the drive shaft (5) of the driving means (1) and the adaptor shaft (7) comprises a closed end hole (11) with a radial notch (13) and a driving nose (12).

3. The driving means elastically mounted in a housing according to claim 1 or 2, **characterized in** that a sleeve (18, 19) enclosing the driving means (1) and being divided in the direction of the axis (6) of rotation of the drive shaft (5) is provided within the housing (9), wherein the mounting means (15) are arranged between the parts (18, 19) of the sleeve and are under axial pre-stress between the parts (18, 19) of the sleeve.

4. The driving means elastically mounted in a housing according any of the claims 1 to 3, **characterized in** that the elastic mounting means (15) between the stator and the housing (9) constitute a closed ring-shaped sealing (24).

5. The driving means elastically mounted in a housing according any of the claims 1 to 4, **characterized in** that the elastic mounting means (15) comprise an elastic ring.

6. The driving means elastically mounted in a housing according claim 5, **characterized in** that the elastic mounting means (15) comprise a plurality of elastic rings which are radially and/or axially arranged side-by-side.

7. The driving means elastically mounted in a housing according claim 6, **characterized in** that the elastic rings are made of different materials.

8. The driving means elastically mounted in a housing according any of the claims 1 to 7, **characterized in** that the radial pre-stress of the elastic mounting means (15) is adjustable.

9. The driving means elastically mounted in a housing according any of the claims 1 to 8, **characterized in** that the ring-shaped bearing (14) is arranged within the proximity of the rotation bearing (10).

10. Single corn sowing device comprising a housing (9), a cell wheel and a driving means (1) which has a stator and a rotor with a drive shaft (5) having an axis of rotation (6), wherein a rotation bearing for an adaptor shaft (7) carrying the cell wheel is provided at the housing, which adaptor shaft (7) has an axis of rotation (8) and is in connection for common rotation with the drive shaft (5) of the driving means (1), **characterized in** that the housing (9) has an area with an inner surface (16) running coaxially to the axis (6) of rotation of the drive shaft (5) and/or the stator has an area with an outer surface (17) running coaxially to the axis (6) of rotation of the drive shaft (5), and in that, between the housing (9) and the stator within the area having the coaxial inner surface (16) and/or the coaxial outer surface (17), elastic mounting means (15) which are under radial pre-stress are arranged to form a ring-shaped bearing (14), wherein, outside the ring-shaped bearing (14), the driving means (1) is free from the housing (9), and in that the axis (6) of rotation of the drive shaft (5) of the driving means (1) is by means of the elastic mounting means (15) arranged and kept in alignment with the axis (8) of rotation of the adaptor shaft (7) so that angular errors and eccentricities between the axes (6, 8) of rotation are compensated.

## Revendications

1. Mécanisme d'entraînement (1) monté élastiquement dans un boîtier (9), avec un stator et avec un rotor présentant un arbre mené (5), mécanisme dans lequel le boîtier (9) présente une zone avec une surface intérieure (16) coaxiale à l'axe de rotation (6) de l'arbre mené (5) et/ou dans lequel le stator présente une zone avec une surface extérieure (17) coaxiale à l'axe de rotation (6) de l'arbre mené (5), mécanisme dans lequel entre le boîtier (9) et le stator, dans la zone avec la surface intérieure coaxiale (16) et/ou dans la zone avec la surface extérieure coaxiale (17) sont disposés des moyens de palier (15) réunis en un palier de forme annulaire (14), où les moyens de palier (15) sont soumis à une précontrainte radiale et où le mécanisme d'entraînement (1) est, à l'extérieur du palier annulaire (14), situé extérieurement au boîtier (9), **caractérisé en ce que** dans le boîtier (9) est prévu un arbre d'adaptation (7) monté dans un palier de rotation et présentant un axe de rotation (8), arbre d'adaptation (7) qui est en liaison de rotation avec l'arbre mené (5) du mécanisme d'entraînement (1), et en ce que l'axe de rotation (6) de l'arbre mené (5) est, par l'intermédiaire du moyen de palier élastique (15), disposé et maintenu en alignement avec l'axe de rotation (8) de l'arbre d'adaptation (7) de manière telle que les écarts angulaires et les excentricités entre les axes de rotation (6, 8) sont compensés.

2. Mécanisme d'entraînement monté dans un boîtier suivant la revendication 1, **caractérisé en ce que** la liaison de rotation entre l'arbre mené (5) du mécanisme d'entraînement (1) et l'arbre d'adaptation (7) présente un trou borgne (11) avec une rainure axiale (13) et un toc d'entraînement (12).

3. Mécanisme d'entraînement monté dans un boîtier suivant la revendication 1 ou 2, **caractérisé en ce que** dans le boîtier (9) est prévue une douille (18, 19) subdivisée en direction de l'axe de rotation (6) de l'arbre mené (5) et contenant le mécanisme d'entraînement (1), les moyens de palier (15) étant disposés entre les parties (18, 19) de la douille et étant soumis à une précontrainte axiale entre les parties (18, 19) de la douille.

4. Mécanisme d'entraînement monté dans un boîtier suivant l'une quelconque des revendications de 1 à 3, **caractérisé en ce que** les moyens de palier (15) constituent un joint d'étanchéité annulaire fermé (24) entre le stator et le boîtier (9).

5. Mécanisme d'entraînement monté dans un boîtier suivant l'une quelconque des revendications de 1 à 4, **caractérisé en ce que** les moyens de palier élastiques (15) présentent un anneau élastique.

6. Mécanisme d'entraînement monté dans un boîtier suivant la revendication 5, **caractérisé en ce que** les moyens de palier élastiques (15) présentent plusieurs anneaux élastiques disposés radialement et/ou axialement côte à côte.

7. Mécanisme d'entraînement monté dans un boîtier suivant la revendication 6, **caractérisé en ce que** les anneaux élastiques sont fabriqués en des matériaux différents.

8. Mécanisme d'entraînement monté dans un boîtier suivant l'une quelconque des revendications de 1 à 7, **caractérisé en ce que** la précontrainte radiale des moyens de palier élastiques (15) est réglable.

9. Mécanisme d'entraînement monté dans un boîtier suivant l'une quelconque des revendications de 1 à 8, **caractérisé en ce que** le palier de forme annulaire (14) est disposé à proximité du palier de rotation (10).

10. Semoir monograine avec un boîtier (9), une roue à cannelures et un mécanisme d'entraînement (1), avec un stator et un rotor présentant un arbre mené (5) présentant un axe de rotation (6), où sur le boîtier est prévu un palier de rotation pour un arbre d'adaptation (7) à axe de rotation (8) portant la roue à cannelures, arbre d'adaptation (7) qui est en liaison de rotation avec l'arbre mené (5) du mécanisme d'entraînement, **caractérisé en ce que** le boîtier (9) présente une zone avec une surface intérieure (16) coaxiale à l'axe de rotation (6) de l'arbre mené (5) et en ce que le stator présente une zone avec une surface extérieure (17) coaxiale à l'axe de rotation (6) de l'arbre mené (5), et en ce qu'entre le boîtier (9), dans la zone avec la surface intérieure coaxiale (16) et le stator, dans la zone avec la surface extérieure coaxiale (17) sont disposés des moyens de palier (15) élastiques soumis à une précontrainte radiale réunis en un palier de forme annulaire (14), le mécanisme d'entraînement (1) étant situé extérieurement au boîtier (9), et en ce que l'axe de rotation (6) de l'arbre mené (5) du mécanisme d'entraînement (1) est par l'intermédiaire du moyen de palier élastique (15), disposé en alignement avec l'axe de rotation (8) de l'arbre d'adaptation (7) de manière telle que les écarts angulaires et les excentricités entre les axes de rotation (6, 8) sont compensés.
